# EUROPÄISCHE PATENTSCHRIFT

(11) **EP 1 140 415 B1**
(45) Veröffentlichungstag und Bekanntmachung des Hinweises auf die Patenterteilung: **02.06.2004**
(21) Anmeldenummer: 00904873.7
(22) Anmeldetag: 04.01.2000
(51) Int. Cl.: B23K 26/10

(54) **EINRICHTUNG ZUM SPANNEN UND SCHWEISSEN VON BLECHEN**
DEVICE FOR CLAMPING AND WELDING PIECES OF SHEET METAL
DISPOSITIF POUR SERRER ET SOUDER DES TOLES

(30) Priorität: 11.01.1999 DE 19900699
(43) Veröffentlichungstag der Anmeldung: 10.10.2001
(73) Patentinhaber: ThyssenKrupp Technologies AG, 45128 Essen (DE)
(72) Erfinder: KIPPING, Josef, D-66839 Schmelz (DE); GÖRGEN, Josef, D-66709 Weiskirchen (DE)
(74) Vertreter: Dahlkamp, Heinrich-Leo, Dipl.-Ing.
(86) Internationale Anmeldenummer: PCT/EP2000/000023
(87) Internationale Veröffentlichungsnummer: WO 2000/041840

(56) Entgegenhaltungen:
- EP-B- 0 734 304
- US-A- 5 478 983
- PATENT ABSTRACTS OF JAPAN vol. 018, no. 611 (M-1708), 21. November 1994 (1994-11-21) & JP 06 234089 A (TOYOTA MOTOR CORP), 23. August 1994 (1994-08-23)

## Beschreibung

Die Erfindung bezieht sich auf eine Einrichtung zum Spannen und Schweißen von aneinanderliegenden Blechen, vorzugsweise für die Anwendung im Automobilbau.

Im Karosseriebau ist es bekannt, an einem Roboterarm sowohl ein Spannwerkzeug als auch einen Laserschweißkopf zu befestigen. Zum Schweißen von aufeinanderliegenen Blechen gibt es dabei verschiedene Spannwerkzeuge. Entweder werden die Spannwerkzeuge gemeinsam mit dem Laserschweißkopf zum Schweißen auf den Bauteilen bewegt oder zum Ausführen einer Schweißnaht wird das Spannwerkzeug fest gegen die Bauteile gepresst und anschließend wieder gelöst. Die Ausführung einer Schweißnaht mit z.B. mehreren Zentimetern Länge ist bei einem bewegten Spannwerkzeug problematisch, da es unter anderem zu Verschiebungen zwischen den Bauteilen kommen kann.

Aus der EP 0734 304 B1, das als nächstliegenden Stand der Technik angesehen wird, ist eine Vorrichtung zum Schweißen, insbesondere zum Laserschweißen mit einem Schweißkopf bekannt. Die Bleche liegen dabei bei der Bearbeitung auf einer Auflage und werden mittels federnder Andrückvorrichtung angepreßt. Andruckvorrichtung und Schweißkopf sind an der Hand eines Manipulators befestigt und werden damit entsprechend dem Schweißnahtverlauf bewegt. Am Niederhalter sind zusätzlich Sensoren, z. B. Abstandsmeß-, Kraft- oder Drucksensoren angeordnet, um festzustellen, ob Niederhalter und Werkstück Kontakt besitzen oder um den örtlich auftretenden Druck festzustellen. Bei diesem Stand der Technik wird jeweils der Schweißstrahl auf das obere Blech gerichtet und durch das obere Blech der Kontakt mit den darunterliegenden Blechen hergestellt. Ein Schweißen mit einem Schweißstrahl, der in den Schweißspalt zwischen den aneinanderliegenden Blech gerichtet ist, ist hierbei nicht vorgesehen. Das geschieht zweckmäßigerweise mit ansich bekannten Spannwerkzeugen.

Besonderes Augenmerk muss hierbei auf die genaue Positionierung der Blechkanten zueinander gerichtet werden, da die Blechkanten Unebenheiten aufweisen können und insbesondere bei dünnen Blechen Beschädigungen entstehen können.

Der Erfindung liegt daher die Aufgabe zugrunde, eine Einrichtung zum Spannen und Schweißen vorzuschlagen, bei der eine genaue und dauerhafte Spannung und Positionierung der aneinanderliegenden Bleche relativ zueinander und zum in den Schweißspalt zwischen den Blechen gerichteten Schweißkopf zur Herstellung einer exakten Schweißnaht erreicht wird.

Die Lösung dieser Aufgabe ist im Patentanspruch 1 angegeben. Die Unteransprüche 2 bis 10 enthalten sinnvolle Ausführungsformen dazu.

Bei der erfindungsgemäßen Einrichtung ist das Spannwerkzeug, vorzugsweise eine hydraulisch betätigte Spannzange mittels einer Konsole an einem frei programmierbaren Roboter montiert. Gleichzeitig ist an der Konsole auch der Laserschweißkopf befestigt. Konsole und/oder Laserschweißkopf sind mit Hilfe des Roboterarmes in einer Linearführung gegenüber dem Spannwerkzeug entsprechend dem Verlauf der Schweißnaht bewegbar. Durch diese zusätzliche erfindungsgemäße Linearführung und Bewegbarkeit relativ zueinander ist es möglich, zunächst die gesamte Einrichtung, d.h. Konsole und Laserschweißkopf mit Spannwerkzeug an die Schweißstelle heranzuführen und die zu verschweißenden Bleche nach exakter Positionierung mit Hilfe des Spannwerkzeuges fest zu verspannen. Zur Positionierung der Bleche können an dem Spannwerkzeug vorzugsweise als Taster zur Erfassung der Blechkanten ausgebildete Anschlagelemente angeordnet sein. Nach Positionierung und Spannen der Bleche ist es durch die Linearführung möglich, Konsole und Laserschweißkopf relativ zu den Blechen und der Spannzange zu bewegen und dadurch eine Schweißnaht von z.B. einigen Zentimetern herzustellen. Es ist der besondere Vorteil dieser Vorrichtung, dass während der Bewegung des Laserschweißkopfes das Spannwerkzeug und die Bleche nicht bewegt werden und fest in ihrer exakten Position bleiben.

Es hat sich als günstig erwiesen, zusätzlich an der Konsole eine Arretiervorrichtung anzuordnen, um während der Positionierung des Spannwerkzeuges an den Blechen eine Relativbewegung zwischen Konsole und Spannwerkzeug zu verhindern. Diese Arretiereinrichtung kann zweckmäßigerweise aus einem Pneumatikzylinder bestehen, der z.B. in Richtung der Linearführung wirkt und das Spannwerkzeug an einem Ende der Linearführung festhält.

Das Spannwerkzeug kann erfindungsgemäß als Spannzange mit einem Hydraulikzylinder ausgebildet sein, der vorzugsweise quer zur Längsrichtung der Linearführung wirkt und die Bleche gegen einen Arm der Spannzange verspannt. Dabei können die Enden zweier aufeinander liegender Bleche mit ihren Schnittkanten direkt an den Anschlagelementen positioniert und dann durch den Hydraulikzylinder mit dem Arm der Spannzange verspannt werden. Es reicht aber auch aus, bei unterschiedlicher Höhe der Blechkanten mit Hilfe der Anschlagelemente nur die Kante des kürzeren Bleches zu erfassen. Die Anschlagelemente können in Schweißrichtung mit Abstand zueinander angeordnet werden.
Zweckmäßigerweise ist der Abstand so gewählt, dass zwischen den Anschlagelementen eine ausreichend lange Schweißnaht von z.B. mehreren Zentimetern hergestellt werden kann.

Der Laserstrahl des Laserschweißkopfes wird in einem bestimmten Winkel, insbesondere spitzen Winkel zur Berührungsfläche der beiden aufeinander liegenden Bleche auf die Berührungsfläche gerichtet. Zur Einstellung des Einfallwinkels des Laserstrahles ist dazu an der Konsole eine geeignete Führung vorgesehen. Nach Spannung der Bleche in der Spannzange wird zunächst der Arretierzylinder drucklos geschaltet und damit die Linearführung entriegelt, damit anschließend mit Hilfe des Roboterarmes der Laserschweißkopf entlang der zu verschweißenden Blechkanten linear bewegt werden kann. Für die Bewegung wird hierbei der üblicherweise vorhandene Servoantrieb des Roboterarmes benutzt, sodass mit einem beliebigen Geschwindigkeitsprofil regulierbar die Laserschweißnaht erzeugt wird.

Hierdurch kann in möglichst kurzer Zeit eine exakte und gleichmäßige Schweißung durchgeführt werden.

Es hat sich als günstig erwiesen, in dem einen Arm der Spannzange eine fensterartige Öffnung für den Laserstrahl vorzusehen, deren Durchmesser oder Länge größer ist als die maximale Länge der herzustellenden Schweißnaht. Nach Beendigung des Schweißvorganges wird der Hydraulikzylinder der Spannzange entspannt und der Roboterarm kann zur nächsten Schweißstelle versetzt werden. Der Arretierzylinder wird während dieses Versetzvorganges wieder geschlossen, um eine exakte Position des Spannwerkzeuges zur Konsole herzustellen.

Die Erfindung wird anhand der beigefügten Figuren 1 bis 4 beispielsweise näher erläutert. Es zeigen
- Fig. 1: eine Ansicht der erfindungsgemäßen Einrichtung und
- Fig. 2: einen vergrößerten Ausschnitt des Spannwerkzeuges 6.

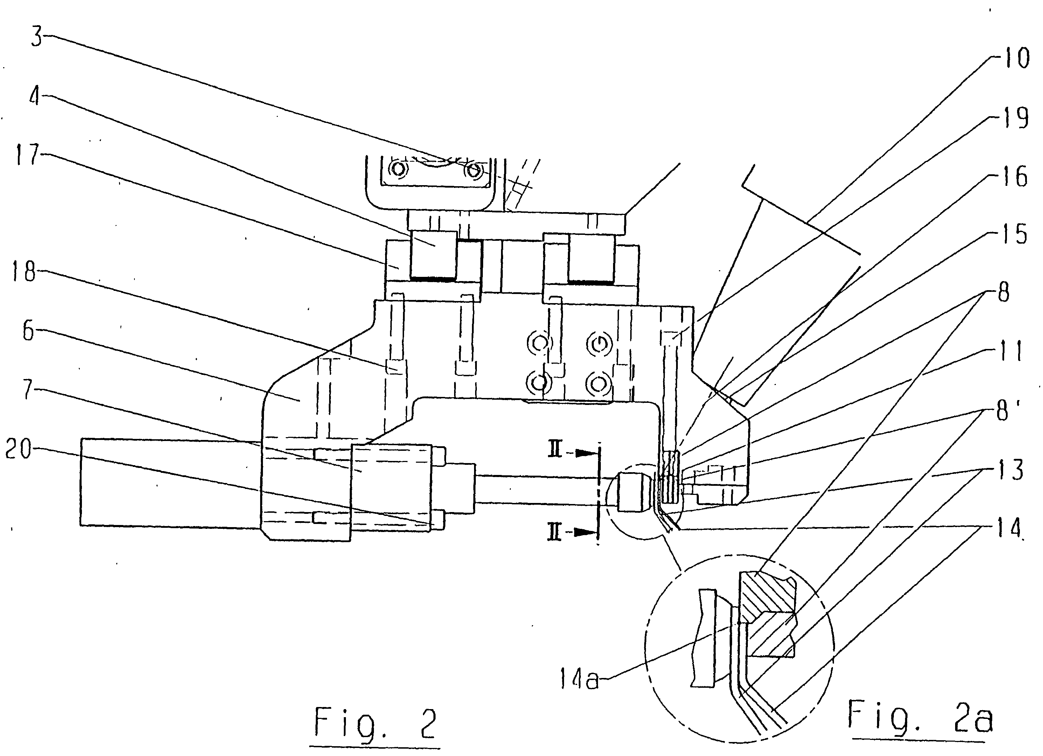

- Fig. 2 a: einen vergrößerten Ausschnitt zum Bereich der Anschlagelemente 8, 8'

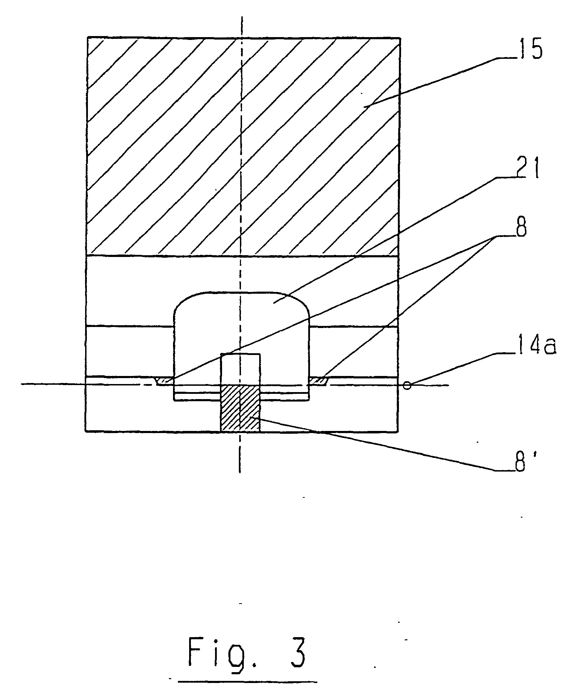

- Fig. 3: einen Schnitt nach Linie II - II von Fig. 2

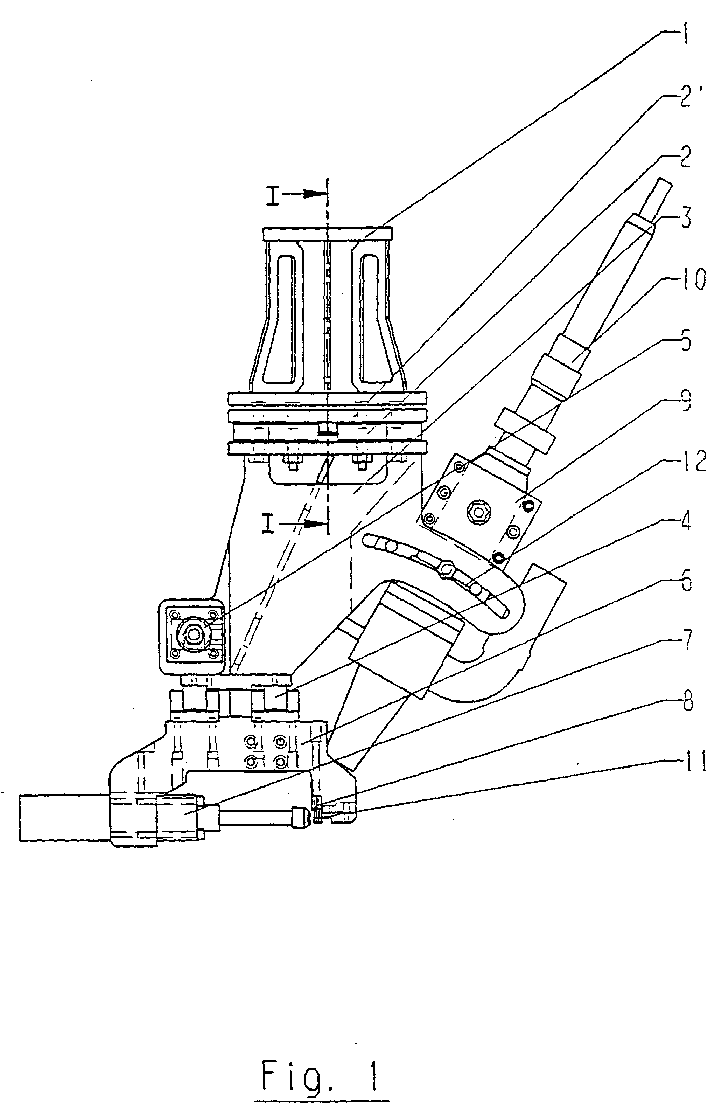

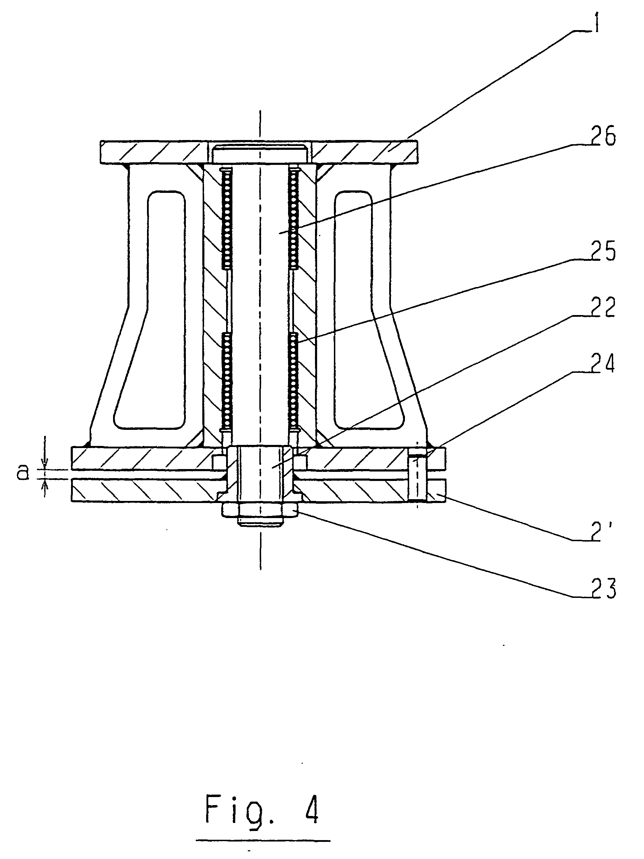

- Fig. 4: einen Schnitt nach Linie 1 - I von Fig. 1

Die erfindungsgemäße Einrichtung wird über einen Anbauflansch 1 an einem nicht dargestellten Roboterarm befestigt. Eine Konsole 3 ist unter Zwischenlegung eines Vibrationsausgleiches 2 an dem Anbauflansch 1 befestigt. Mit der Konsole 3 ist über die Halterung 9 der Schweißkopf 10 verbunden. Der Winkel des auf die Schweißnaht 11 gerichteten Energiestrahles, insbesondere Laseroder Elektrondenstrahles 16 wird mit Hilfe der Führung 12 in der Konsole 3 eingestellt. An der Unterseite der Konsole 3 befinden sich Linearführungen 4 für die Verfahrbarkeit des Spannwerkzeuges 6. Dazu sind am Spannwerkzeug 6 mit Befestigungsschrauben 18 jeweils den Linearführungen 4 angepasste Laufwagen 17 befestigt. An der Konsole 3 befindet sich außerdem eine aus einem Pneumatikzylinder bestehende Arretiereinrichtung 5, um das Spannwerkzeug 6 in einer bestimmten Position an der Konsole 3 zu arretieren.

In Fig. 2 sind die miteinander zu verschweißenden Enden der Bleche 13 und 14 in dem Spannwerkzeug 6 dargestellt. Diese Bleche 13, 14 werden mit Hilfe des Hydraulikzylinders 7, der mit Hilfe von Schrauben 20 an einem Arm des Spannwerkzeuges 6 befestigt ist, gegen den anderen Arm 15 des Spannwerkzeuges 6 gepresst.

In der vergrößerten Darstellung der Fig. 2 a ist die Position der Enden der beiden Bleche 13, 14 genauer ersichtlich. Damit der Energiestrahl 16 genau in den Schweißspalt zwischen den Blechen 13 und 14 gerichtet wird, wird die Oberkante 14 a des Bleches 14 mit Hilfe der senkrecht zueinander angeordneten Anschlagflächen der Anschlagelemente 8 und 8' genau erfasst. Die Oberkante des Bleches 13 muss dabei nicht so exakt erfasst werden. Entscheidend ist, daß der Arm 15 des Spannwerkzeuges 6 exakt zur Oberkante 14 a positioniert ist und nach Betätigung des Hydraulikzylinders 7 der Energiestrahl 16 in dem Schweißspalt durch die lineare Relativbewegung die Schweißnaht 11 erzeugt.

Der Schnitt nach Fig. 3 zeigt die Anordnung der beiden beabstandeten Anschlagelemente 8, die mit ihren unteren Anschlagflächen auf der Oberkante 14 a des Bleches 14 liegen. Rechtwinklig dazu liegen die Anschlagflächen des Anschlagelementes 8' auf der Seitenfläche des Bleches 14. Die Anschlagelemente 8 sind mit Befestigungsschrauben 19 mit dem Arm 15 der Spannzange 6 verbunden. In dem Arm 15 befindet sich eine Öffnung 21, durch die der Energiestrahl 16 des Schweißkopfes 10 von außen auf den Schweißspalt gerichtet wird.

Um kleinere Lageungenauigkeiten an der Schweißstelle auszugleichen, ist nach Fig. 4 zwischen Anbauflansch 1 und der oberen Halteplatte des Vibrationsausgleiches 2 ein Ausgleichshub a vorgesehen. Damit wird auch beim Schweißvorgang eine geringfügige Relativbewegung des Schweißkopfes 10 zum festen Roboterarm ermöglicht. Die obere Halteplatte 2' des Vibrationsausgleiches 2 ist dann über die Befestigungsschraube 22, die Kontermutter 23, die Führungssäule 26, die Linearbuchse 25 und den Verdrehschutz 24 mit dem Anbauflansch 1 verbunden.

### Bezugszeichenliste:

- 1: Anbauflansch eines Roboterarmes
- 2: Vibrationsausgleich
- 2': Halteplatte von 2
- 3: Konsole
- 4: Linearführung zwischen 3 und 6
- 5: Arretiereinrichtung, Pneumatikzylinder
- 6: Spannwerkzeug, Spannzange
- 7: Hydraulikzylinder
- 8, 8': Anschlagelemente an 15
- 9: Halterung für 10 an 3
- 10: Schweißkopf
- 11: Schweißnaht zwischen 13 und 14
- 12: Führung für Verstellung von 10 an 3
- 13: Blech
- 14: Blech
- 14 a: Kante von 14
- 15: Arm von 6
- 16: Energiestrahl, insbesondere Laserstrahl oder Elektronenstrahl
- 17: Laufwagen an 6 für 4
- 18: Befestigungsschraube für 17 an 6
- 19: Befestigungsschraube für 8
- 20: Schraube zur Befestigung von 7 an 6
- 21: Öffnung in 15
- 22: Befestigungsschraube
- 23: Kontermutter
- 24: Verdrehschutz
- 25: Linearbuchse
- 26: Führungssäule
- a: Ausgleichshub

## Patentansprüche

1. Einrichtung zum Spannen und Schweißen von aneinariderliegenden Blechen (13, 14), vorzugsweise für die Anwendung im Automobilbau, wobei
- an einem Anbauflansch (1), vorzugsweise eines Roboterarmes eine Konsole (3) befestigt ist,
- die Konsole (3) ein Spannwerkzeug (6) und einen Schweißkopf (10) trägt,
- die Konsole (3) und/oder der Schweißkopf (10) mit Hilfe des Anbauflansches (1) in einer Linearführung (4) gegenüber dem Spannwerkzeug (7) entsprechend dem Verlauf der Schweißnaht (11) bewegbar ist,
**dadurch gekennzeichnet, dass**
- der Energiestrahl (16) des Schweißkopfes (10) zur Bildung einer Kehlnaht in den Schweißspalt zwischen den Blechen (13, 14) gerichtet ist, und
- zur Erfassung der Position der Kanten mindestens eines der Bleche (13, 14) und zur Positionierung der Bleche (13, 14) relativ zueinander und/oder zum Schweißkopf (10) an dem als Spannzange ausgebildeten Spannwerkzeug (6) Anschlagelemente (8, 8') angeordnet sind.

2. Einrichtung nach Anspruch 1, **dadurch gekennzeichnet, dass** an der Konsole (3) eine Arretiereinrichtung (5) angeordnet ist, die für die Positionierung des Spannwerkzeuges (6) an den Blechen (13, 14) eine Relativbewegung zwischen Konsole (3) und dem Spannwerkzeug (6) verhindert.

3. Einrichtung nach Anspruch 2, **dadurch gekennzeichnet, dass** die Arretiereinrichtung (5) als Pneumatikzylinder ausgebildet ist.

4. Einrichtung nach Anspruch 1, 2 oder 3, **dadurch gekennzeichnet, dass** das Spannwerkzeug (6) als Spannzange mit einem Hydraulikzylinder (7) ausgebildet ist.

5. Einrichtung nach Anspruch 4, **dadurch gekennzeichnet, dass** die Anschlagelemente (8, 8') an einem Arm (15) der Spannzange, der dem Hydraulikzylinder (7) gegenüber liegt, angeordnet sind.

6. Einrichtung nach Anspruch 1, **dadurch gekennzeichnet, dass** die zu verschweißenden Kanten der aneinanderliegenden Bleche (13, 14) sich in unterschiedlichen Ebenen befinden und die Anschlagelemente (8, 8') nur die Position der Kante (14 a) des kürzeren Bleches (14) erfassen.

7. Einrichtung nach Anspruch 1, **dadurch gekennzeichnete, dass** die Anschlagelemente (8, 8') rechtwinklig zueinander angeordnete AnschlagFlächen besitzen.

8. Einrichtung nach Anspruch 1, **dadurch gekennzeichnet, dass** in Schweißrichtung zwei Anschlagelemente (8) mit Abstand zueinander angeordnet sind, zwischen denen die Schweißnaht gebildet wird.

9. Einrichtung nach Anspruch (5), **dadurch gekennzeichnet, dass** in dem Arm (15) des Spannwerkzeuges (6) eine Öffnung (21) für den Energiestrahl (16) angeordnet ist, deren Durchmesser oder Länge größer ist als die maximale Länge der herzustellenden Schweißnaht (11).

10. Einrichtung nach einem der vorhergehenden Ansprüche, **dadurch gekennzeichnet, dass** der Energiestrahl (16) auf die Berührungsfläche der Kanten der beiden aufeinanderliegenden Bleche (13, 14) in einem spitzen Winkel zur Berührungsfläche gerichtet ist.

## Claims

1. A device for clamping and welding plates being in contact with each other, preferably for use in automobile manufacture, wherein
- a bracket (3) is fastened to a mounting flange (1), preferably of a robot arm;
- said bracket (3) carrying a clamping tool (6) and a welding head (10);
- said bracket (3) and/or the welding head (10) being movable by the aid of a mounting flange (1) in a linear guide (4) opposite to the clamping tool (7) in conformity with the course of the weld seam (11);
**characterized in that**
- the energy beam (16) of the welding head (10) is directed into the welding gap between the plates (13, 14) to form a fillet weld, and
- stop elements (8, 8') are arranged at the clamping tool (6) designed as a gripping jaw to pick-up the position of the edges of at least one of the plates (13, 14) and to position the plates (13, 14) in relation to each other and/or to the welding head (10)

2. A device according to claim 1, **characterized in that** a locking device (5) is arranged at the bracket (3), said locking device preventing a relative movement between the bracket (3) and the clamping tool (6) to allow for positioning of the clamping tool (6) at said plates (13, 14).

3. A device according to claim 2, **characterized in that** the locking device (5) is designed and built as a pneumatic cylinder.

4. A device according to any of claims 1, 2 or 3 **characterized in that** the clamping tool (6) is designed and built as a gripping jaw with an hydraulic cylinder (7).

5. A device according to claim 4,**characterized in that** the stop elements (8, 8') are arranged at one arm (15) of the gripping jaw which lies opposite to the hydraulic cylinder (7).

6. A device according to claim 1, **characterized in that** the edges to be welded together of the plates resting against each other (13, 14) are located at different planes and that the stop elements (8, 8') only pick-up the position of the edge (14a) of the shorter plate (14).

7. A device according to claim 1, **characterized in that** the stop elements (8, 8') have stop faces arranged at right angles to each other.

8. A device according to claim 1, **characterized in that** two stop elements (8) are arranged at spaced distance to each other in the direction of welding, in between of which the welding seam is formed.

9. A device according to claim 5, **characterized in that** an opening (21) for the energy beam (16) is arranged in the arm (15) of the clamping tool (6), the diameter or length of said opening being greater than the maximum length of the weld seam (11) to be produced.

10. A device according to any of the preceding claims, **characterized in that** the energy beam (16) is directed onto the contact surface of the edges of the two plates lying one above each other (13, 14) at an acute angle to the contact surface.

## Revendications

1. Dispositif pour serrer et souder des tôles juxtaposées (13, 14), de préférence pour l'utilisation dans l'industrie automobile,
- une console (3) étant fixée à une bride de montage (1) de préférence d'un bras de robot,
- la console (3) portant un outil de serrage (6) et une tête de soudage (10),
- la console (3) et/ou la tête de soudage (10) étant déplaçables en fonction du tracé du cordon de soudure (11) dans un guidage linéaire (4) par rapport à l'outil de serrage (7) à l'aide de la bride de montage (1),
**caractérisé en ce que**
- le rayon d'énergie (16) de la tête de soudage (10) est dirigé dans la fente de soudage entre les tôles (13, 14) pour former une soudure d'angle et
- que des éléments de butée (8, 8') sont disposés sur l'outil de serrage (6), se présentant sous forme de pince de serrage, pour la saisie de la position des arêtes d'au moins une des tôles (13, 14) et pour le positionnement des tôles (13, 14) l'une par rapport à l'autre et /ou par rapport à la tête de soudage (10).

2. Dispositif selon la revendication 1, **caractérisé en ce qu**'un dispositif d'arrêt (5) est disposé sur la console (3), ledit dispositif d'arrêt empêchant un mouvement relatif entre la console (3) et l'outil de serrage (6) pour le positionnement de l'outil de serrage (6) au niveau des tôles (13, 14).

3. Dispositif selon la revendication 2, **caractérisé en ce que** le dispositif d'arrêt (5) se présente sous forme de vérin pneumatique.

4. Dispositif selon la revendication 1, 2 ou 3, **caractérisé en ce que** l'outil de serrage (6) se présente sous forme de pince de serrage avec un vérin hydraulique (7).

5. Dispositif selon la revendication 4, **caractérisé en ce que** les éléments de butée (8, 8') sont disposés sur un bras (15) de la pince de serrage qui est opposé au vérin hydraulique (7).

6. Dispositif selon la revendication 1, **caractérisé en ce que** les arêtes à souder des tôles juxtaposées (13, 14) se trouvent à différents niveaux et que les éléments de butée (8, 8') saisissent seulement la position de l'arête (14a) de la tôle la plus courte.

7. Dispositif selon la revendication 1, **caractérisé en ce que** les éléments de butée (8, 8') possèdent des surfaces de butée disposées perpendiculairement les unes aux autres.

8. Dispositif selon la revendication 1, **caractérisé en ce que** deux éléments de butée (8) sont disposés dans le sens du soudage à distance l'un de l'autre et que le cordon de soudure est réalisé entre ces deux éléments de butée.

9. Dispositif selon la revendication (5), **caractérisé en ce qu**'une ouverture (21) pour le rayon d'énergie (16) est disposée dans le bras (15) de l'outil de serrage (6), le diamètre ou la longueur de ladite ouverture étant supérieur à la longueur maximale du cordon de soudure (11) à réaliser.

10. Disposition selon l'une des revendications précédentes, **caractérisé en ce que** le rayon d'énergie (16) est dirigé sur la surface de contact des arêtes des deux tôles (13, 14) superposées dans un angle aigu par rapport à la surface de contact.
